# EUROPEAN PATENT SPECIFICATION

(11) **EP 2 713 480 B1**
(45) Date of publication and mention of the grant of the patent: **31.01.2018**
(21) Application number: 12186319.5
(22) Date of filing: 27.09.2012
(51) Int. Cl.: H02K 1/27, H02K 1/32

(54) **Rotor of a permanent magnet generator**
Rotor eines Permanentmagnetgenerators
Rotor d'un générateur à aimant permanent

(43) Date of publication of application: 02.04.2014
(73) Proprietor: Siemens Aktiengesellschaft, 80333 München (DE)
(72) Inventor: Kristensen, Torben Boye, 8600 Silkeborg (DK); Semmer, Silvio, 4051 Basel (CH); Soerensen, Thomas, 86640 Lunderskov (DK); Tehrani, Ashkan Vaziri, 8000 Aarhus (DK); Thaarup, Klaus, 2670 Greve (DK)

(56) References cited:
- EP-A2- 1 914 864
- WO-A2-00/13293
- US-A- 427 405
- US-A1- 2008 211 236
- US-A1- 2009 218 900

## Description

The invention relates to an improved rotor of a permanent magnet generator.

Generators convert mechanical energy into electrical energy.

Generators are often used with a gear to transfer the rotational energy into a wanted range of rotations per minute to optimize the use of the generator.

Generators are also built as direct driven generators. In this case the rotational energy is fed directly to the generator; the rotation is not transferred by a gear.

This is often the case in wind power plants or in water power plants, where the rotor of the turbine is directly coupled to the generator. These direct driven generators are rotating slower compared to the generators in geared installations.

Generators in wind turbines are also used as medium speed generators with a gear with a low gear ratio.

Generators are built as electrical machines with an outer rotor or with an inner rotor.

At a machine with an outer rotor the stator is the inner part of the machine. The rotor is mounted rotatable around the stator.

At a machine with an inner rotor, the stator is the outer part of the electric machine. The rotor is mounted rotatable inside the stator.

The rotors of generators are often equipped with permanent magnets. The permanent magnets are installed in the rotor of the generator. The rotor of the generator comprises a support structure and the permanent magnets are mounted to the support structure.

The support structure of the generator is usually a single welded and machined steel component. This component usually has a cylindrical shape, which is at least partially closed at the flat axial sides.

The permanent magnets are mounted to the support structure of the rotor by fixation means.

When the generator is in operation, the permanent magnets interact with the windings of the stator and induce a current in the windings.

US 2009/0218900 A1 discloses a permanent magnet apparatus for achieving electrical performance. The apparatus includes a cylindrical stator assembly having a plurality of stator pole assemblies. Each stator pole assembly includes a wire coil and a laminated stack of axially aligned stator segments.

Each of the stator segments has a center-post portion that is detachably engaged to a back-iron portion. Each rotor pole assembly is provided with a laminated stack of axially aligned rotor segments to which is secured a permanent magnet.

EP 1914864 A2 describes an arrangement to fix permanent magnets to fast rotating rotors of electrical machines. US 2008/0211236 A1 discloses a rotor of an outer rotor permanent magnet generator of a wind turbine, comprising segments of lamination sheets. Each segment comprises outer protrusions with holes for bolts to fix the rotor lamination.

The interaction with the windings leads to changes in the magnetic field around the permanent magnets. As a result eddy currents are induced in the support structure of the rotor of the generator. This results in losses in energy production and the support structure of the rotor is warming up.

The aim of the invention is therefore to provide an improved support structure of a rotor of a permanent magnet generator. The invention is defined by claim 1. A rotor of a permanent magnet generator comprises a support structure that is prepared and arranged in a way to support a permanent magnet. The support structure comprises a lamination of stacked insulated sheets of metal, to inhibit the development of eddy currents in the support structure, that occur due to interaction between the permanent magnet of the rotor and a winding of a stator when the generator is in operation.

The rotor is a rotor of a permanent magnet generator. In this type of generator, a permanent magnet is connected to the rotor of the generator. The generator is an outer rotor generator.

The permanent magnet is connected to the rotor. The rotor comprises a support structure. The support structure supports the permanent magnet. The permanent magnet is detachably attached to the support structure.

The support structure comprises a stack of lamination of insulated sheet metal. When the generator is in operation, the permanent magnet of the rotor interacts with windings in the stator of the generator. Due to this interaction the magnetic field in the vicinity of the permanent magnet is changing its shape.

Due to this changing magnetic field eddy currents are induced in the support structure of the rotor of the generator.
The stack of lamination of the insulated sheet metal inhibits eddy currents from flowing in the support structure.

Thus eddy currents are hindered. Thus the losses of electrical energy are minimized. Thus the development of heat is minimized. Thus the necessity for cooling is reduced.

The lamination of stacked insulated sheets comprises a fixation means for a permanent magnet.

The permanent magnets are detachably attached to the support structure. The support structure comprises stacked insulated sheets of lamination. The sheets of lamination comprise the fixation means for attaching the permanent magnets.

The single sheets of the lamination are formed in a way that they comprise a part of the fixation means. When the single sheets are piled to a stack of lamination, the stack of lamination comprises the fixation means for the permanent magnets.

The fixation means are a part of a dove tail connection for example.

Thus the fixation means are integrated in the support structure. Thus no extra part needs to be connected to the rotor to fasten the permanent magnets to the support structure. Thus the probability of loose parts in the generator is minimized. In addition the steps of attaching parts to the support structure are saved, thus working time in production is saved.

The rotor comprises al least two modules, whereby each module comprises an end plate to fix the lamination of stacked insulated sheets in their position to each other.

The stack of lamination of sheet metal is fastened together by end plates that are connected and hold the stack together.

The end plates are connected by bolts. The end plates are pressed together by the bolts. Thus the metal sheets are pressed together, thus the metal sheets can not move in respect to each other.

The rotor is segmented and the rotor comprises at least two modules that form the support structure.

The rotor comprises at least two modules that are connected together to form the support structure of the rotor.

Thus the modules of the rotor are smaller then the whole rotor. Thus manufacturing and transport are easier for modules then for the whole rotor.

Thus the modules are less heavy then the rotor.

At least two modules are identical.

At least two modules that are connected to form the support structure of the rotor are identical. Thus identical parts need to be produced. Thus production is easier and quicker. The end plates comprise holes, so that two modules are prepared to be connected by bolts.

The modules that are connected to form the support structure of the generator are prepared to be connected to each other. The end plates of the stacks of lamination sheets comprise holes.

Thus the end plates are used to connect the modules together. Bolts are used to connect the modules. The lamination of stacked insulated sheets is fixed by bolts. The stacked lamination of insulated sheets of metal is connected together by bolts. The stacked lamination is framed at two sides by end plates. The end plates comprise holes. Bolts are arranged through the holes and connect the two end plates that frame a stack of lamination.

When the bolts are tight, the end plates are pressed together. The end plates force the lamination sheets together. Thus the sheets in the attack of lamination are fixed in a position in respect to each other.

Thus a very rigid connection can be achieved.

A module comprises a cooling rib; the cooling rib is formed by the lamination sheets, and the cooling rib comprises an opening in the lamination sheets. The bolts for the fixation of the lamination are arranged within the opening in the cooling rib.

The sheets of the lamination comprise an opening. Thus the stack of the lamination sheets comprises an opening. A bolt is guided in the opening in the stack of the lamination sheets.

Thus the bolt is arranged within the outer perimeter of the sheets of the lamination. Thus no tilting forces are acting on the lamination or the end plates, when the bolts are tight. The stack of lamination comprises a cooling rib. The opening is present in the area of the cooling rib.

Thus the bolt is protected. The stack of lamination comprises a minimum of a cross section along its width. Thus the stack of lamination is not weakened by the opening present in the stack of the lamination.

Thus the danger of a weak spot in the stack of lamination is minimized. Thus the danger of a weak spot in the support structure is minimized. Thus the rotor of the generator is more rigid and stabile.

A permanent magnet generator comprises a rotor according to one of the preceding claims.

A permanent magnet generator is equipped with a rotor as described above.

The generator is an outer rotor electric machine.

A rotor according to the invention is used as a rotor in a permanent magnet generator in a wind turbine.

The permanent magnet generator as described above is used in a wind turbine.

The wind turbine is a direct driven wind turbine.

Generators of direct driven wind turbines show a large diameter of up to several meters and also a length of several meters. These generators are built for an electrical power of more then one Megawatt.

Thus it is very important to reduce losses and avoid the creation of heat in the in the generator.

Losses occur due to eddy currents. By using a permanent magnet rotor as described above the development of eddy current is reduced. Thus the efficiency of the generator is increased. Thus the losses of energy are minimized.

Thus the creation of heat is reduced. Thus the necessity of cooling is reduced. Thus costs for cooling of the generator are saved. Thus the costs of electrical energy created by a wind turbine according to the claims are reduced.

The invention is shown in more detail by the help of figures. The figures show a preferred configuration and do not limit the scope of the invention.
- FIG 1: shows a module of a rotor of a generator.
- FIG 2: shows another view of a module of a rotor of a generator.
- FIG 3: shows a module of a rotor with a permanent magnet.
- FIG 4: shows an assembly of three modules of a rotor.

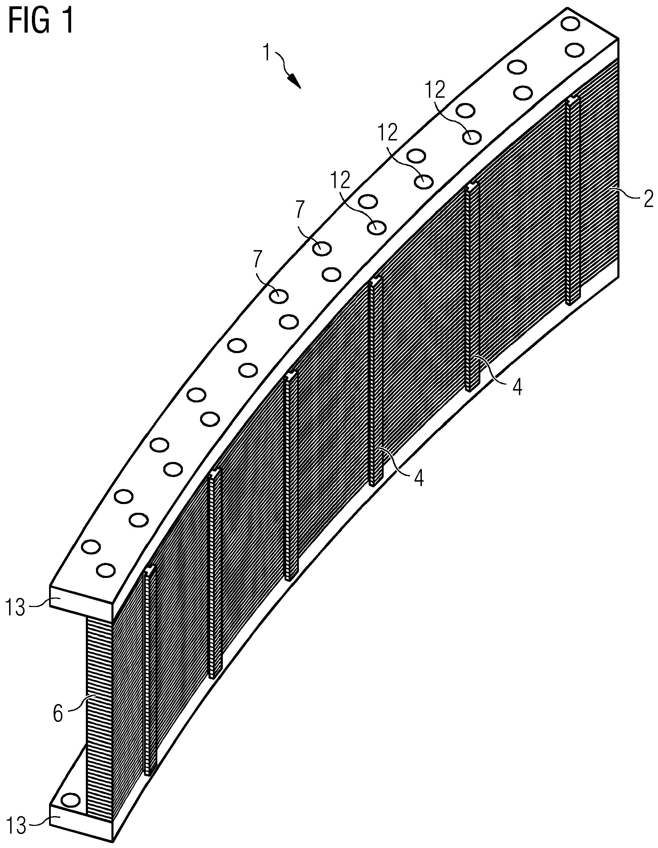

FIG 1 shows a module of a rotor of a generator.

FIG 1 shows a module 1 of a support structure of a permanent magnet rotor of a generator. Several modules 1 are connected to build the support structure of the generator. The support structure of the generator supports the permanent magnets of the generator.

The module 1 comprises a stack of lamination of insulated sheet metal 6. At the upper and lower end the module 1 is equipped with end plates 13 that show holes 7, 12 for bolts for example.

The holes for bolts 12 are used to connect the two end plates 13 of a module. The end plates of a module are connected by bolts. The bolts fix the sheets of the lamination 6 in a certain position between the two end plates 13.

The module 1 is a segment of an outer rotor of a generator. The module comprises an inner side 2. The inner side 2 shows fixation means 4 to fasten the permanent magnets to the module 1. When the rotor is connected with a stator, the permanent magnets on the inner side of the rotor face the stator.

Modules 1 are connected to form a support structure of a rotor. The modules are connected by bolts for example. The bolts are fixed through the holes 7 of the end plates 13.

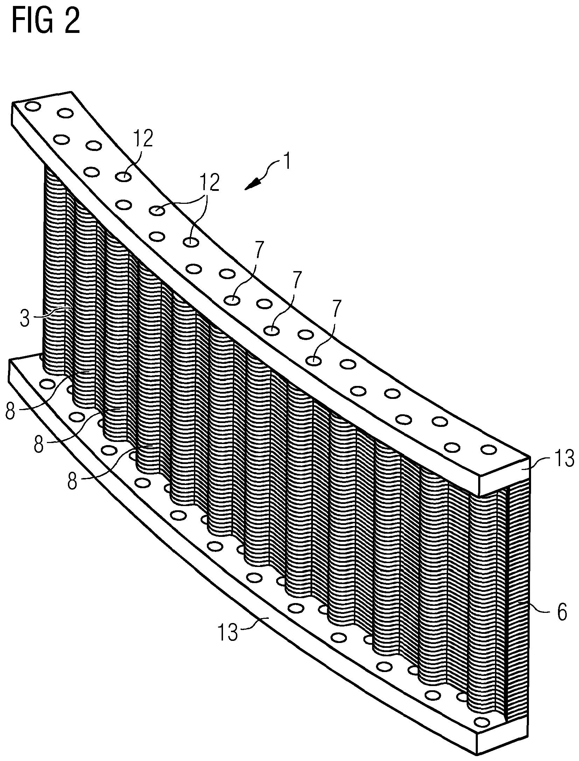

FIG 2 shows another view of a module of a rotor of a generator.

FIG 2 shows a module 1 of a support structure of a rotor of a permanent magnet generator. The module 1 is a module of an outer rotor generator. The module 1 comprises an outer side 3. The outer side is facing away from the stator, when the rotor is connected to a stator.

The outer side 3 comprises cooling ribs 8. The module comprises a stack of lamination sheets 6 that are electrically insulated.

The lamination sheets 6 are prepared in a way that they comprise an opening. When the lamination sheets 6 are arranged as a stack, the openings in the single sheets form a channel. The channel is used for a bolt. The bolt connects the end plate 13 at the upper end of the module 1 with the end plate 13 at the lower end of the module 1.

The channel is arranged in the cooling rib of the stack of lamination sheets 6.

The holes for bolts 12 are used with the bolts that connect the two end plates 13.

The holes 7 are used to connect the module 1 with neighboring modules to form a support structure of the rotor.

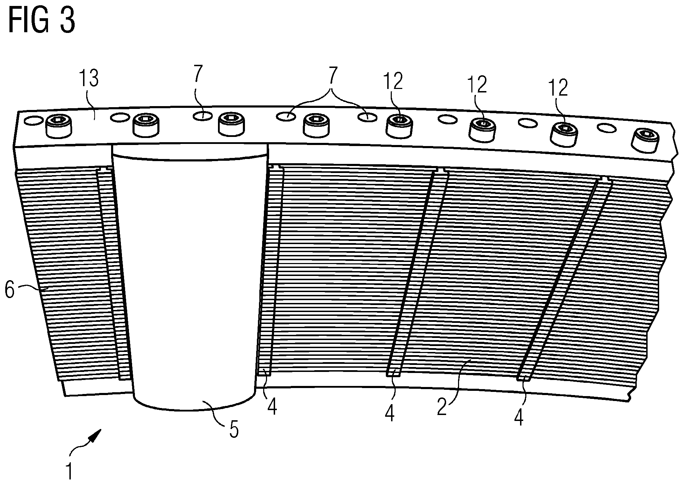

FIG 3 shows a module of a rotor with a permanent magnet.

FIG 3 shows the inner side of a module 1. The module 1 comprises a stack of insulated lamination sheets 6 that are held together by bolts that go through holes 12 in the end plates 13.

The module 1 comprises fixation means 4 to hold the permanent magnet 5. In this embodiment the lamination sheets 6 are formed in a way that they comprise the fixation means 4. The permanent magnet 5 is arranged in the fixation means 4.

The module 1 comprises holes 7 to connect the module 1 to a neighboring module. The connection can be achieved by bolts for example.

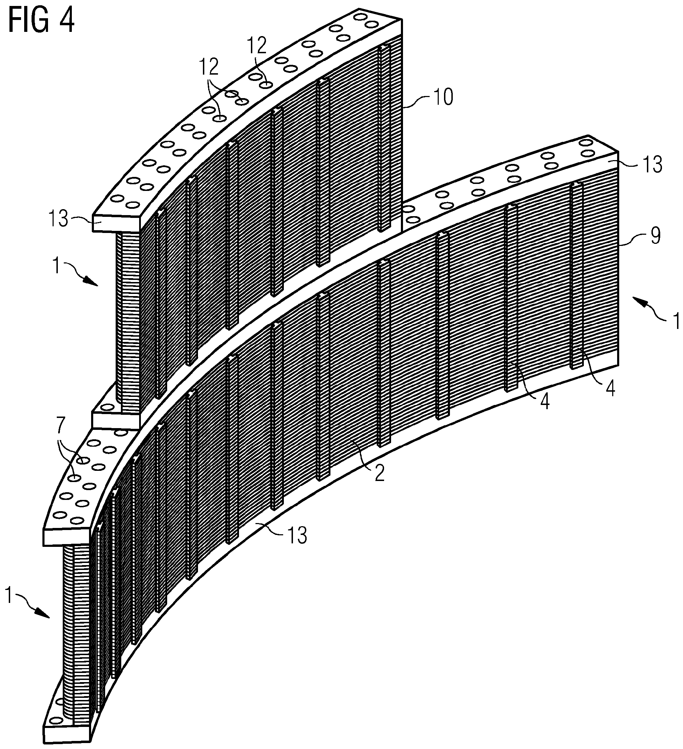

FIG 4 shows an assembly of three modules of a rotor.

FIG 4 shows three modules 1 that are arranged and connected to form a part of a support structure of a rotor.

The modules 1 are arranges in a first row 9 and a second row 10. The two modules 1 of the first row 9 are connected to the module 1 in the second row 10. The modules comprise end plate 13 with holes 7. The modules 1 are connected by bolts.

A module 1 is not connected to its neighboring module in the same row. The module 1 in the second row 10 is arranged in a staggered manner in respect to the modules in the first row 9. So the module 1 in the second row 10 is connected to two modules 1 in the first row 9.

## Claims

1. Rotor of an outer rotor permanent magnet generator of a wind turbine,
- whereby the rotor comprises a support structure that is prepared and arranged in a way to support a permanent magnet (5),
- whereby the support structure comprises a lamination of stacked insulated sheets of metal (6), to inhibit the development of eddy currents in the support structure, that occur due to interaction between the permanent magnet of the rotor and a winding of a stator when the generator is in operation,
- whereby the lamination of stacked insulated sheets (6) comprises a fixation means (4) for a permanent magnet (5),
- whereby the lamination of stacked insulated sheets (6) is fixed by bolts,
- whereby the rotor is segmented and the rotor comprises at least two modules (1) that form the support structure, wherein a module (1) comprises a cooling rib (8),
- whereby the cooling rib (8) is formed by the lamination sheets (6), and
- whereby the cooling rib (8) comprises an opening in the lamination sheets (6) and
- whereby the bolts for the fixation of the lamination (6) are arranged within the opening in the cooling rib, whereby each module (1) comprises an end plate (13) to fix the lamination of stacked insulated sheets (6) in their position to each other,
whereby the at least two modules (1) are identical,
whereby the end plates (13) comprise holes (7), so that two modules (1) are prepared to be connected by bolts.

2. Permanent magnet generator whereby the generator comprises a rotor according to one of the preceding claims.

3. Use of a rotor according to one of the claims 1 to 4 as a rotor in a permanent magnet generator in a direct driven wind turbine.

## Patentansprüche

1. Rotor eines Außenrotor-Permanentmagnetgenerators einer Windenergieanlage,
- wobei der Rotor eine Tragkonstruktion umfasst, die so ausgelegt und angeordnet ist, dass sie einen Permanentmagneten (5) trägt,
- wobei die Tragkonstruktion ein Paket aus geschichteten, isolierten Metallblechen (6) zum Verhindern des Entstehens von Wirbelströmen in der Tragkonstruktion umfasst, die aufgrund einer Wechselwirkung zwischen dem Permanentmagneten des Rotors und einer Wicklung eines Stators auftreten, wenn der Generator in Betrieb ist,
- wobei das Paket aus geschichteten, isolierten Blechen (6) ein Fixiermittel (4) für einen Permanentmagneten (5) umfasst,
- wobei das Paket aus geschichteten, isolierten Blechen (6) mit Bolzen fixiert ist,
- wobei der Rotor segmentiert ist und mindestens zwei Module (1) umfasst, die die Tragkonstruktion bilden, wobei ein Modul (1) eine Kühlrippe (8) umfasst,
- wobei die Kühlrippe (8) von den Blechen (6) gebildet wird und
- wobei die Kühlrippe (8) eine Öffnung in dem Blechpaket (6) umfasst und
- wobei die Bolzen zum Fixieren des Pakets (6) in der Öffnung in der Kühlrippe angeordnet sind,
wobei jedes Modul (1) eine Endplatte (13) zum Fixieren des Pakets aus geschichteten, isolierten Blechen (6) in ihrer Position zueinander umfasst,
wobei sich die mindestens zwei Module (1) gleichen, wobei die Endplatten (13) Löcher (7) umfassen, so dass zwei Module (1) so ausgelegt sind, dass sie mit Bolzen miteinander verbunden werden.

2. Permanentmagnetgenerator, wobei der Generator einen Rotor nach einem der vorhergehenden Ansprüche umfasst.

3. Verwendung eines Rotors nach einem der Ansprüche 1 bis 4 als Rotor bei einem Permanentmagnetgenerator einer Windenergieanlage mit Direktantrieb.

## Revendications

1. Rotor d'un générateur à aimant permanent à rotor extérieur d'une éolienne,
- dans lequel le rotor comprend une structure de support qui est préparée et agencée de manière à supporter un aimant permanent (5),
- dans lequel la structure de support comprend une stratification de feuilles de métal isolées empilées (6), pour empêcher le développement de courants de Foucault dans la structure de support, qui apparaissent du fait d'une interaction entre l'aimant permanent du rotor et un enroulement d'un stator lorsque le générateur est en fonctionnement,
- dans lequel la stratification de feuilles isolées empilées (6) comprend un moyen de fixation (4) pour un aimant permanent (5),
- dans lequel la stratification de feuilles isolées empilées (6) est fixée par des boulons,
- dans lequel le rotor est segmenté et le rotor comprend au moins deux modules (1) qui forment la structure de support,
- dans lequel un module (1) comprend une ailette de refroidissement (8),
- dans lequel l'ailette de refroidissement (8) est formée par les feuilles de stratification (6), et
- dans lequel l'ailette de refroidissement (8) comprend une ouverture dans les feuilles de stratification (6) et
- dans lequel les boulons pour la fixation de la stratification (6) sont agencés à l'intérieur de l'ouverture dans l'ailette de refroidissement,
- dans lequel chaque module (1) comprend une plaque d'extrémité (13) pour fixer la stratification de feuilles isolées empilées (6) dans leur position les unes par rapport aux autres,
- dans lequel les au moins deux modules (1) sont identiques,
- dans lequel les plaques d'extrémité (13) comprennent des trous (7), de sorte que deux modules (1) sont préparés pour être connectés par des boulons.

2. Générateur à aimant permanent dans lequel le générateur comprend un rotor selon l'une des revendications précédentes.

3. Utilisation d'un rotor selon l'une des revendications 1 à 4 comme un rotor dans un générateur à aimant permanent dans une éolienne à entraînement direct.
